# EUROPEAN PATENT APPLICATION

(11) **EP 2 474 353 A1**
(43) Date of publication of application: **11.07.2012**
(21) Application number: 10813520.3
(22) Date of filing: 03.09.2010
(51) Int. Cl.: B01J 19/10, B01F 5/00, B01F 11/02, B01J 19/00

(54) **TUBULAR FLOW REACTOR**

(30) Priority: 04.09.2009 JP 2009205202
(71) Applicant: Nisso Engineering Co., Ltd., Tokyo 101-0051 (JP)
(72) Inventor: YONEYA, Akira, Tokyo 101-0051 (JP)
(74) Representative: Goulard, Sophie
(86) International application number: PCT/JP2010/005427
(87) International publication number: WO 2011/027569

(57) **Abstract**

A tubular flow reactor which comprises a plurality of inflow channels for introducing at least two kinds of fluids to cause a reaction; a reaction tube having an internal space for merging the fluids and causing the merged fluids to flow through to cause a reaction; an outflow channel for discharging the reaction product from the reaction tube; and a rod-shaped ultrasonic emitter placed at the flow-merging portion of the internal space of the reaction tube; wherein the inflow channels and the outflow channel are connected to the reaction tube such that their respective internal spaces communicate with the internal space of the reaction tube; and an ultrasonic wave can be emitted from the rod-shaped ultrasonic emitter to the fluid passing through the reaction tube.

## Description

### TECHNICAL FIELD

The present invention relates to a tubular flow reactor. More specifically, the present invention relates to a tubular flow reactor, where a contact area between reactive substrates just after confluence is increased and a reduction in yieldof a reactionproduct due to concentration non-uniformity is prevented.

### BACKGROUND ART

Recently, as flow reactors for reacting fluids such as reagents, micrometer-sized or millimeter-sized reactors have been developed. One of micro reactors having simplest shapes is a T-shaped or Y-shaped reactor. Such a reactor has a plate provided with a T-shaped or Y-shaped groove having a depth of about 40 µm and a width of about 100 µm.
The groove is closed with a flat plate, and the reactor is connected to a tube. The plate serving as a lid is provided with a hole at each end of the T- or Y-shape, i.e., three holes in total. Two different reactive substrates are simultaneously charged to the reactor through the left and right ends of the upper portion, respectively, and are merged with each other at the center. The merged reactive substrates react with each other while flowing towards the lower portion to produce a reaction product, which is discharged from the lower portion. When the flow rates of the reactive substrates are equal to each other, the reaction starts just at the base portion of the T- or Y-shape.

Since the inner diameter of the flow channel of the micro reactor is small, the Reynolds number is small to make the flow of a fluid laminar. Since the convective flow in the tube diameter direction is small in the laminar flow region, the charged two reactive substrates just after confluence separate to the right and left at the approximately center of the descending tube as a border, and flow separately.
Then the contact area of both fluids is only the boundary surface. The both substrates are put into contact with each other by means of diffusion at this boundary surface.
Unfortunately, under such conditions, the frequency that both substrates are put into contact with each other is low, and the concentrations of the substrates tend to be non-uniform. If the mixing is insufficient, for example, the reaction product may further react with the reactive substrate to produce a by-product, resulting in a reduction in yield. In the case that the flow rates of the two different reactive substrates are largely different from each other, for example, in the case of that a volume ratio of liquid A to liquid B is 1:10, the boundary surface between the two liquids is inclined to the liquid A side. Subsequently, the probability that liquid B is brought into contact with liquid A is very low, and a part of liquid B may reach the outlet of the reactor without contacting with liquid A.
In particular, in the case of a reactive substrate having a high viscosity, such a phenomenon is notable.

As a reactor trying to enhance the mixing just after the confluence of fluids, for example, PLT 1 discloses a micro reactor comprising a plurality of flow channels and a flow-merging channel where the plurality of flow channels join, in which fluids flowing through the plurality of flow channels are merged at the flow-merging channel to react, wherein an ultrasonic vibrator which applies an ultrasonic wave to the flow-merging channel is disposed on an outer side surface of the flow-merging channel. PLT 2 discloses a minute reaction device comprising a capillary flow channel formed in a size of nm-µm unit, wherein the minute reaction device is for mixing or reacting fluids as a raw material or a specimen fed to the capillary flow channel, wherein the minute reaction device is further provided with ultrasonic vibrators transmitting ultrasonic vibration to the flow channel, and the ultrasonic vibrators stir the fluid passing through the flow channel by the ultrasonic vibration.

PLT 3 discloses a cylindrical sonoreactor equipped an ultrasonic vibrator having a semi-arc-like or flat-plate-like ultrasonic radiation plane to a cylindrical or square container, wherein ultrasonic wave is emitted to a liquid to be treated in the cylindrical or square container from the ultrasonic vibrator to focus the ultrasonic wave to an inside of the cylindrical or square container. PLT 4 discloses tubular ultrasonic chemical reactor comprising a circular tube, an ultrasonic vibrator fixed to outer surface of the circular tube to be an acoustic radiator, a ring for balanced transmitting a vibration from the vibrator, and a metallic tube for cooling or heating fluid equipped to a middle part of the circular tube with flanges at both ends of the circular tube. The reactor described in PLTs 1-4 has an ultrasonic vibrator set on an outer wall of a reaction container, in which the outer wall works as an ultrasonic radiator, giving a physical vibration to the fluid in the flow channel in order to improve a mixing efficiency of fluids.

PLT 5 discloses a reactor composed of an spherical or cylindrical reaction tank, columnar or cylindrical radiator for emitting ultrasonic energy, and a vibrator for generating an ultrasonic oscillation having at least one frequency setting on basal end of the radiator, in which the radiator is fixed in the reaction tank at the basal end of radiator where the vibrator is set on, whereby ultrasonic wave is radiated from side surface of the radiator or side and tip end surface of the radiator. In the reactor described in PLT 5, a basal portion of the ultrasonic radiator is fixed, and a tip portion is a free end.

### PRIOR ART LITERATURES

### PATENT LITERATURES

PLT 1: JP 2006-51410 A
PLT 2: JP 2005-224746 A
PLT 3: JP 2000-84404 A
PLT 4: JP H10-216507 A
PLT 5: JP 2003-200042 A

### SUMMARY OF THE INVENTION

### PROBLEMS TO BE RESOLVED BY THE INVENTION

It is an object of the present invention to provide a novel tubular flow reactor, where a contact area between reactive substrates just after confluence is increased and a reduction in yieldof a reactionproduct due to concentration non-uniformity is prevented.

### MEANS FOR SOLVING THE PROBLEMS

The present inventor has diligently investigated in order to achieve the object and, as a result, has found that using of a tubular flow reactor comprising a plurality of inflow channels for respective inflow of two or more kinds of fluids to be used in a reaction; a reaction tube having an internal space that is capable of merging the fluids, flowing the merged fluids while the merged fluids are reacted; an outflow channel for outflow of a reaction product from the reaction tube; and a rod-shaped ultrasonic emitter placed at the flow-merging portion in the internal space of the reaction tube, wherein the inflow channels and the outflow channels are respectively connected to the reaction tube such that their respective internal spaces communicate with the internal space of the reaction tube, wherein an ultrasonic wave can be emitted from the rod-shaped ultrasonic emitter to the fluids passing through the internal space of the reaction tube can increase the contact area between reactive substrates just after confluence and prevent a reaction product yield from reduction due to concentration nonuniformity. The present invention has been completed based on this finding.

That is, the present invention includes the following aspects.
<1>A tubular flow reactor comprising: a plurality of inflow channels for respective inflow of at least two kinds of fluids to be used in a reaction; a reaction tube having an internal space that is capable of merging the fluids, flowing the merged fluids while the merged fluids are reacted; an outflow channel for outflow of a reaction product from the reaction tube; and a rod-shaped ultrasonic emitter placed at the flow-merging portion in the internal space of the reaction tube, wherein the inflow channels and the outflow channels are respectively connected to the reaction tube such that their respective internal spaces communicate with the internal space of the reaction tube, wherein an ultrasonic wave can be emitted from the rod-shaped ultrasonic emitter to the fluids passing through the internal space of the reaction tube.
<2> The tubular flow reactor according to aspect <1>, further comprising a jacket for cooling or heating the fluids at outer circumference of the reaction tube.
<3> The tubular flow reactor according to aspect <1> or <2>, wherein unevenness is exist at an inner surface of the reaction tube and/or an outer surface of the rod-shaped ultrasonic emitter.
<4> A method of mixing two or more kinds of fluids supplied to a tubular flow reactor comprising: flowing two or more kinds of fluids into an internal space of a reaction tube; and emitting an ultrasonic wave to the fluids passing through the internal space of the reaction tube from inside toward outside using a rod-shaped ultrasonic emitter placed at a flow-merging portion of the fluids in the internal space of the reaction tube to stir the fluids.
<5> The method of mixing according to aspect <4>, wherein the two or more kinds of fluids are alternately introduced into the internal space of the reaction tube.
<6> The method of mixing according to aspect <4> or <5>, wherein two or more kinds of fluids are introduced from the tangential direction to an inner circumference of the reaction tube so as to generate swirling flow in the internal space of the reaction tube.

### ADVANTAGEOUS EFFECT OF THE INVENTION

According to the tubular flow reactor and the method of mixing in the present invention, the contact area between reactive substrates just after confluence is increased, and a reduction in yield of a reaction product due to concentration nonuniformity is prevented. In the tubular flow reactor of the present invention, a contact area between reactive substrates just after confluence can be secured sufficiently when two or more kinds of fluids is introduced, even if there is a large difference in flow rates of the fluids. Consequently, concentration nonuniformity can be minimized.

### BRIEF DESCRIPTION OF DRAWINGS

Fig. 1 is a conceptual diagram illustrating an embodiment of the tubular flow reactor in the present invention.
Fig. 2 is a conceptual diagram illustrating another embodiment of the tubular flow reactor in the present invention.
Fig. 3 is a conceptual diagram illustrating an example of flow rate control when fluids alternately inflow.
Fig. 4 is a conceptual diagrams illustrating aspects of positional relationships between inflow channels and a reaction tube of the tubular flow reactor in the present invention.

### EMBODIMENTS OF THE INVENTION

A tubular flow reactor of the present invention will be described with reference to drawings. Note that the present invention is not limited to the embodiment and includes transformations, additions, and modifications within the intent and the purpose of the present invention.

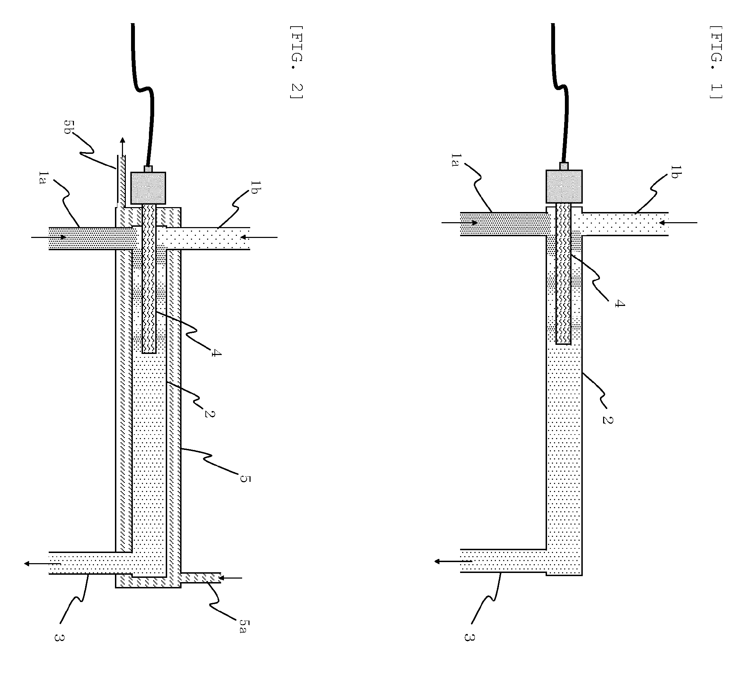

Fig. 1 is a conceptual diagram illustrating an embodiment of the tubular flow reactor of the present invention. The reactor of the present invention has reaction tube 2 having an internal space to be able to react fluids while the fluids flow and rod-shaped ultrasonic emitter 4. The rod-shapedultrasonic emitter 4 is set up in a vicinity of a portion, where inflow channel 1a and 1b are connected with reaction tube 2 (That is, flow-merging portion), of the internal space of the reaction tube along the longitudinal direction. In figure 1, the rod-shaped ultrasonic emitter is fixed to the edge of the reaction tube at an inflow channel side edge of the emitter and the other edge of the emitter is a free edge. In this embodiment, the internal space of the flow-merging portion (left-hand segment in figure 1) has annular-shaped cross-section, and the internal space of the part without the rod-shaped ultrasonic emitter (right-hand segment in figure 1) has circular-shaped cross-section. In the drawing, the reactor is shown such that the reaction tube and the rod-shaped ultrasonic emitter are approximately coaxially arranged, but the reactor of the present invention is not limited thereto. The reaction tube and the rod-shaped ultrasonic emitter are straight in the embodiment shown in figure 1, but it is not limited thereto, and they may be curved. Moreover, one rod-shaped ultrasonic emitter is usually arranged in the internal space of the reaction tube, but it is not limited thereto. Two or more rod-shaped ultrasonic emitters may be arranged in the internal space of the reaction tube. The reaction tube and the rod-shaped ultrasonic emitter are not limited to the one having circular-shaped cross-section.

The sizes of the reaction tube and the rod-shaped ultrasonic emitter are not particularly limited. In the case of a micrometer-sized or millimeter-sized reactors, the clearance between the internal surface of the reaction tube and the external surface of the rod-shaped ultrasonic emitter is preferably 50 µm to 2.5 mm and most preferably 50 µm to 1 mm. Furthermore, from the viewpoint of capability of producing reactors using commercially available tubes, connectors, and other components, the inner diameter of the reaction tube is preferably 2 to 10 mm, and the outer diameter of the rod-shaped ultrasonic emitter is preferably 1 mm to 5 mm. The thickness and the material of the reaction tube can be appropriately selected from the viewpoints of, for example, strength, heat conductivity, corrosion resistance, and heat resistance. From the viewpoints of corrosion resistance and heat resistance, the external surface of the rod-shaped ultrasonic emitter preferably comprises titaniummetal, or an alloy such as a titanium-based alloy, a nickel-based alloy (e.g., Hastelloy (registered trademark) and Inconel (registered trademark)), a cobalt-based alloy(e.g.,Stellite(registeredtrademark)).

Inflow channels 1a and 1b, for letting two or more kinds of fluids to be used in a reaction inflow each, are connected to one end of the reaction tube. The inflow channels are connected to the reaction tube such that the internal spaces of the inflow channels communicate with the internal space of the reaction tube. The number of the inflow channels is not limited to those shown in the drawings. Furthermore, the inflow channels may be a plurality of inflow channels joined to each other at upstream position where they are connected to the reaction tube.
The two or more kinds of fluids flowing into the reaction tube from the inflow channels are merged with each other in the internal space of the reaction tube. The inflow channels may be each connected to the reaction tube at any angle with respect to the rod-shaped ultrasonic emitter, but are preferably connected so as to be almost orthogonal.
Note that in the present invention, the term "almost orthogonal" or "almost right angle" means 90±45 degrees.
In the reactor shown in Fig. 1, the inflow channels are vertically symmetrical, but the positions where the inflow channels are connected may shift in the longitudinal direction of the reaction tube. For example, the inflow channel 1b may be obliquely connected to the end of the reaction tube, and the inflow channel 1a may be obliquely connected at a position slightly shifted towards the downstream side from the inflow channel 1b.

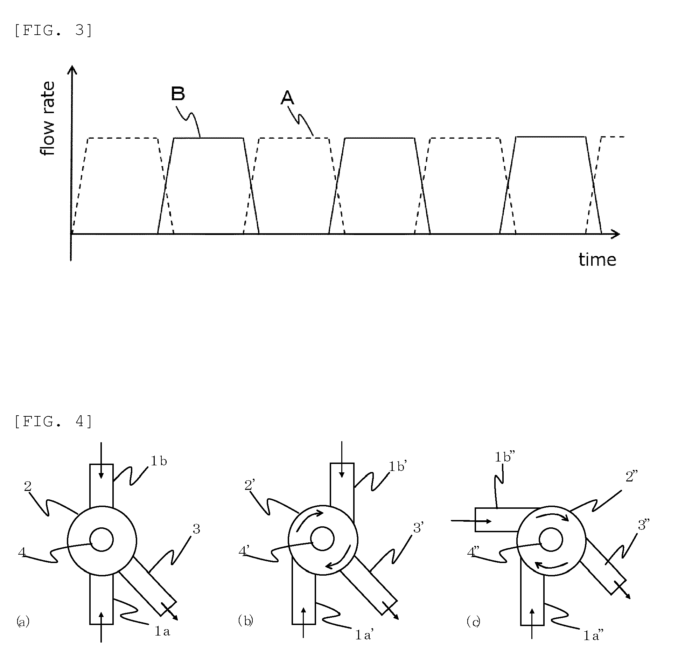

Moreover, the central axes of the inflow channels may not cross the central axis of the reaction tube. Fig. 4 is a diagram illustrating the reactor of the present invention observed from the longitudinal direction of the reaction tube. Fig. 4(a) shows an aspect in which the central axes of the inflow channels cross the central axis of the reaction tube. In the aspect, the inflow channels 1a and 1b (and the outflow channels 3) are connected in a radial direction from the central axis of the reaction tube 2. Fluids flowing from the inflow channels collide with the rod-shaped ultrasonic emitter squarely. Fig. 4(b) shows an aspect in which the central axes of the inflow channels do not cross the central axis of the reaction tube. In the aspect, the inflow channels 1a' and Ib' are connected in the tangential direction to the inner circumference of the reaction tube 2' and the outflow channel 3' is connected in a radial direction from the central axis of the reaction tube 2'. Fig. 4(c) shows an aspect in which the central axes of the inflow channels do not cross the central axis of the reaction tube, In the aspect, the inflow channels 1a" and 1b" (and the outflow channel 3") are connected in the tangential direction to the inner circumference of the reaction tube 2". A swirling flow (e.g., the flow indicated by the clockwise arrows in Fig. 4) is generated in the annular space between the reaction tube and the rod-shaped ultrasonic emitter when the inflow channel is connected to the reaction tube in the tangential direction to the inner circumference of the reaction tube as shown in Figs. 4(b) and 2(c).

Two or more kinds of fluids may alternately flow into the confluence space. In the case of that two or more kinds of fluids alternately flow into the confluence space, the fluids probably flow individually towards the downstream end in a plug flow state. The plug flow of the fluid mixes mutually by diffusion and becomes uniform gradually with flowing. For example, liquid A and liquid B can be intermittently sent out through the inflow channels 1a and Ib, respectively, by controlling flow rates as shown in Fig. 3. It is preferable to control the flow rates such that the sum of the flow rate of liquid A (broken line in Fig. 3) and the flow rate of liquid B (solid line in Fig. 3) during switching between liquid A and liquid B is constant to avoid fluctuation in total flow rate. Furthermore, for example, in the case of using three kinds of fluids, liquid A, liquid B, and liquid C, these liquid A, liquid B, and liquid C may be controlled to flow in one by one, repeatedly, or a combination of liquid A and liquid B, a combination of liquid B and liquid C, and a combination of liquid C and liquid A may be controlled to flow in one by one, repeatedly. The flow rate patterns are not limited thereto. Examples of a device performing such flow rate control include plunger pumps and syringe pumps. Total flow rate of fluids flowing into the reaction tube is appropriately determined depending on the chemical reaction rate, the retention time, the diameters and the lengths of tubes, and other factors.

The switching intervals of alternate inflow of two or more kinds of fluids can be appropriately selected depending on the volume of the reaction tube and other factors.
For example, the alternate inflow of two or more kinds of fluids can be switched every several milliseconds to several seconds. Such alternate inflow of fluids greatly increases the interface area between the fluids and enhances uniform mixing of the fluids.

The flow rate of each fluid is not particularly limited. For example, the flow rates of fluids can be adjusted to be equal to each other. In the case of the same flow rates, for example, if the reactive substrates respectively contained in liquid A and liquid B react with equimolar value with each other, the concentrations of the reactive substrates respectively contained in liquid A and liquid B can be adjusted to be equal to each other. Furthermore, if reactive substrates react with each other at a molar ratio of 2:1, the concentrations of the reactive substrates respectively contained in liquid A and liquid B can be adjusted to be 2:1. These concentration ratios may be modified in consideration of, for example, reactivity of the reactive substrates and reverse reaction. The reactor of the present invention also can be applied to the case in which the inflow rates of fluids are largely different from each other, for example, such a case in which the volume ratio of liquid A to liquid B is 1:10. In the reactor of the present invention, a sufficient contact area between reactive substrates just after confluence can be secured, even if there is a large difference in flow rate of the fluids. Consequently, concentration nonuniformity can be minimized. The merged fluids flow in the internal space of the reaction tube in the longitudinal direction.
The reactive substrates chemically react to give a product during that time.

In the reactor of this embodiment, the internal space of the flow-merging portion of the reaction tube is partitioned by the rod-shaped ultrasonic emitter so as to have an annular-shaped cross-section. In an ordinary cylindrical tube (having a circular-shaped cross-section), fluids flow in a laminar flow state. Consequently, a large difference between the flow rate at the axial center of the tube and the flow rate in the Vicinity of the tube wall occurs. For example, the plug flow considered to be formed by an alternate inflow of liquid A and liquid B has a convex-like density distribution in the longitudinal direction of the tube. In contrast, in the reactor of this embodiment, the cross-section of the internal space of flow-merging portion hasan annularshape. It is conceivable that the difference between the flow rate at the central portion of the annular space and the flow rate in the vicinity of the tube wall is small, a flow is maintained similar to a theoretical plug flow state, and uniformization due to diffusion occurs in such a state. It is conjectured that due to this difference in flow rate distribution, in the reactor of the present invention, the contact area between reactive substrates just after confluence is increased and a reduction in yieldof a reactionproduct due to concentration nonuniformity is prevented.

In the tubular flow reactor of the present invention, the ultrasonic wave can be emitted from the rod-shaped ultrasonic emitter to the fluid passing in the internal space of the reaction tube. The fluid is stirred by effects of this ultrasonic wave such as a cavitation effect, an effect of a vibrational acceleration, an effect of a liner flow, and the like. And then a mixing efficiency can be improved. Since the rod-shaped ultrasonic emitter is set up in the internal space, ultrasonic wave energy can be emitted in direction of 360 degree from a surface of the emitter toward outside, and a more uniform stir can be realized. The position of the edge of the rod-shaped ultrasonic emitter is not especially limited. It is preferable that there is the rod-shaped ultrasonic emitter in the range before uniformly mixing the fluids merged in the reaction tube. Specifically, the length L of the longitudinal direction of the part that comes in contact with the fluids is preferably from d to 10d, in which the d is defined as the diameter of the rod-shaped ultrasonic emitter.

The rod-shaped ultrasonic emitter has a device to generate ultrasonic wave and a vibration plane where the ultrasonic wave generated at the device is diffused and is emitted outside. A piezoelectric element or a magnetostrictive element is usually used as the ultrasonic wave generation device. The piezoelectric element is composed of the ceramics where distortion occurs when electric pressure is applied. When the alternating voltage is applied to the piezoelectric element, the ceramics is distorted in the frequency of the Voltage and the ultrasonic vibration is generated. The magnetostrictive element is composed of the ceramics where distortion occurs when magnetic field is applied. When the alternating magnetic field is applied to the magnetostrictive element, the ceramics is distorted in the frequency of the magnetic field and the ultrasonic vibration is generated. Intherod-shaped ultrasonic emitter used for the present invention, a whole face of the rod being in the reaction tube is preferably vibration plane. A commercialized product may be used as the rod-shaped ultrasonic emitter. The ultrasonic wave generatedis a soundwave (elasticwave) having high frequency (vibration frequency) that a person with normal hearing sense cannot hear. Specifically, the ultrasonic wave is usually a sound wave having frequency of 20kHz or more.
The upper limit of the frequency is preferably 100kHz since lower frequency gives larger stir energy.

In the reactor shown in the drawings, the internal surface of the reaction tube and the external surface of the rod-shaped ultrasonic emitter are smooth without unevenness, but the internal surface of the reaction tube and/or the external surface of the rod-shaped ultrasonic emitter are/is preferably provided with unevenness. The unevenness may be spiral grooves (or spiral ridges), grooves (or ridges) along the direction disturbing the flow of the fluid, or punctate protrusions or depressions.

The length of the reaction tube in the reactor of the present invention can be appropriately selected depending on the chemical reaction rate, the flow rate, and other factors. In the case of conducting a chemical reaction with a slow reaction rate, the length of the tube canbe long. In contrast, in the case of conducting a chemical reaction with a rapid reaction rate, the length of the tube can be short. The reaction temperature can be controlled by a heat exchange between an inside and an outside of the reaction tube. For example, the jacket can be set up at the outer side to enclose the reaction tube as shown in figure 2. By putting a refrigerant or a heat media into jacket 5 from channel 5a, the heat-exchange to the fluid in the reaction tube can be conducted. The channel 5b is a vent for the refrigerant or the heat media. A fin can be set up at the outer side of the reaction tube to improve the heat-exchange efficiency.

The obtained reaction product is discharged through the outflow channel 3 connected to the other end of the reaction tube. The downstream of outflow channel 3 may be further connected to, for example, another reactor (including a tubular flow reactor of the present invention) or may be connected to an apparatus for purification. In Fig. 1, theoutflowchannel 3 is connected in almost orthogonal direction to the rod-shaped ultrasonic emitter 4, but is not limited thereto. The outflow channel 3 may be connected in an oblique direction to the rod-shaped ultrasonic emitter. In addition, as shown in Fig. 4, the outflow channel may be connected in a radial direction from the central axis of the reaction tube (Fig. 4(a) or (b)) or may be connected in the tangential direction of the reaction tube (Fig. 4 (c)). The number of the outflow channel is not limited to one. Two or more outflow channels may be provided. The outflow channel may be branched.

As described above, the tubular flow reactor of the present invention produces an excellent effect that the contact area between reactive substrates just after confluence is increased, and a reduction in yield of a reaction product due to concentration nonuniformity is prevented by the synergy among the working by the cross-section shape or the like of the channel and the working by the ultrasonic vibration as compared with a conventional ultrasonic wave reactor.

### Description of symbols

- 1a, 1b**:**: inflow channel
- 2:: reaction tube (flow-merging portion and reaction portion)
- 3:: outflow channel
- 4:: rod-shaped ultrasonic emitter
- 5:: heat exchange jacket

## Claims

1. A tubular flow reactor comprising:
a plurality of inflow channels for respective inflow of at least two kinds of fluids to be used in a reaction;
a reaction tube having an internal space that is capable of merging the fluids, flowing the merged fluids while the merged fluids are reacted;
an outflow channel for outflow of a reaction product from the reaction tube; and
a rod-shaped ultrasonic emitter placed at the flow-merging portion in the internal space of the reaction tube, wherein the inflow channels and the outflow channel are respectively connected to the reaction tube so that the respective internal spaces of the inflow channels and the outflow channel communicate with the internal space of the reaction tube, wherein an ultrasonic wave can be emitted from the rod-shaped ultrasonic emitter to the fluids passing through the internal space of the reaction tube.

2. The tubular flow reactor according to Claim 1, further comprising a jacket for cooling or heating the fluids at outer circumference of the reaction tube.

3. The tubular flow reactor according to Claim 1 or 2, wherein unevenness is exist at an inner surface of the reaction tube and/or an outer surface of the rod-shaped ultrasonic emitter.

4. A method of mixing two or more kinds of fluids supplied to a tubular flow reactor comprising:
flowing at least two kinds of fluids into an internal space of a reaction tube; and
emitting an ultrasonic wave to the fluids passing through the internal space of the reaction tube from inside toward outside using a rod-shaped ultrasonic emitter placed at a flow-merging portion of the fluids in the internal space of the reaction tube to stir the fluids.

5. The method of mixing according to Claim 4, wherein the at least two kinds of fluids are alternately introduced into the internal space of the reaction tube.

6. The method of mixing according to Claim 4 or 5, wherein the at least two kinds of fluids are introduced from the tangential direction to an inner circumference of the reaction tube so as to generate swirling flow in the internal space of the reaction tube.
